(19) **Europäisches Patentamt**

**European Patent Office**

**Office européen des brevets**

(11) **EP 1 311 079 B1**

(12) **FASCICULE DE BREVET EUROPEEN**

(45) Date de publication et mention
de la délivrance du brevet:
**13.10.2004 Bulletin 2004/42**

(51) Int Cl.⁷: **H04B 10/18**

(21) Numéro de dépôt: **02292723.0**

(22) Date de dépôt: **31.10.2002**

(54) **Système de transmission de signal optique à phase contrôlée**

Phasengesteuertes optisches Signalübertragungssystem

Phase controlled optical signal transmission system

(84) Etats contractants désignés:
**AT BE BG CH CY CZ DE DK EE ES FI FR GB GR
IE IT LI LU MC NL PT SE SK TR**

(30) Priorité: **12.11.2001 FR 0114604**

(43) Date de publication de la demande:
**14.05.2003 Bulletin 2003/20**

(73) Titulaire: **ALCATEL**
**75008 Paris (FR)**

(72) Inventeur: **Bissessur, Hans**
**75014 Paris (FR)**

(74) Mandataire: **Fournier, Michel**
**Compagnie Financière Alcatel,
Intellectual Property Department,
5, rue Noel Pons
92734 Nanterre Cedex (FR)**

(56) Documents cités:
**EP-A- 0 975 107**

- **PENNINCKX D: "Enhanced-phase-shaped
  binary transmission" ELECTRONICS LETTERS,
  IEE STEVENAGE, GB, vol. 36, no. 5, 2 mars 2000
  (2000-03-02), pages 478-480, XP006014910 ISSN:
  0013-5194**
- **PENNINCKX D ET AL: "EXPERIMENTAL
  VERIFICATION OF THE PHASE-SHAPED
  BINARY TRANSMISSION (PSBT) EFFECT" IEEE
  PHOTONICS TECHNOLOGY LETTERS, IEEE
  INC. NEW YORK, US, vol. 10, no. 4, avril 1998
  (1998-04), pages 612-614, XP002098378 ISSN:
  1041-1135**

## Description

L'invention se situe dans le domaine des systèmes optiques de télécommunication pour la transmission de données numériques. Elle concerne plus particulièrement les techniques de transmission de signaux optiques numériques à haut débit par des liaisons à longue distance utilisant des fibres optiques et/ou au travers de commutateurs optiques.

Un système optique de transmission comporte typiquement au moins un émetteur optique relié à un récepteur optique par l'intermédiaire d'une liaison optique qui peut être constituée d'une simple fibre ou de plusieurs tronçons de fibre reliés entre eux par des amplificateurs optiques et/ou des milieux de couplage plus complexes comportant par exemple des commutateurs réalisés au moyen de coupleurs, de guides et de portes optiques.

Un émetteur comporte une source de signal optique dont la fonction est d'appliquer à une onde porteuse optique une modulation fonction de l'information à émettre. Une même liaison peut véhiculer plusieurs signaux portés par des ondes porteuses de longueurs d'onde différentes. On réalise alors un système de transmission à multiplexage en longueur d'onde, dit "WDM" (de l'anglais "Wavelength Division Multiplexing").

Parmi les différentes techniques de modulation répertoriées, la plus couramment utilisée aujourd'hui est la modulation d'amplitude. Les formats de modulation généralement adoptés sont de type NRZ ou RZ. Ils consistent à coder des informations binaires par une variation de la puissance de l'onde porteuse entre deux niveaux : un niveau bas correspondant à une extinction de l'onde et un niveau haut correspondant à une puissance optique maximale. Ces variations de niveau sont déclenchées à des instants imposés par un rythme d'horloge de période fixe T qui définit ainsi des cellules temporelles successives allouées aux données binaires à transmettre. Par convention, les niveaux bas et hauts représentent habituellement les valeurs binaires "0" et "1" respectivement.

La technique de modulation d'amplitude, souvent désignée par "ASK" (de l'anglais "Amplitude-Shift Keying"), présente l'avantage d'une mise en oeuvre relativement facile au moyen de composants optiques éprouvés, mais elle présente toutefois l'inconvénient d'être sensible à la dispersion chromatique. Bien qu'il existe des dispositifs de compensation de la dispersion chromatique, tels que les fibres dites "DCF" (de l'anglais "Dispersion compensating Fiber"), les compensations obtenues sont souvent imparfaites, en particulier lorsqu'il s'agit de compenser des canaux WDM répartis sur une large bande spectrale.

C'est pourquoi il a été proposé un nouveau format de modulation moins sensible à la dispersion chromatique. Le procédé de transmission optique appliquant ce format, appelé "Transmission Binaire à Profil de Phase Contrôlé" ou PSBT (de l'anglais : "Phase-Shaped Binary Transmission"), est notamment décrit dans la demande de brevet européen EP-A-0 792 036, déposée le 17 février 1997, publiée le 27 août 1997 et correspondant au brevet américain US-A-5 920 416, délivré le 6 juillet 1999.

Selon ce procédé, à l'émission on applique à une onde porteuse un décalage de phase optique de l'ordre de 180° en valeur absolue à l'intérieur de chaque cellule qui correspond à un "0" logique et qui précède ou succède à toute cellule contenant un "1" logique. En réception, on peut convertir le signal optique reçu en signal électrique de la même façon que pour signal modulé au format NRZ, c'est-à-dire au moyen d'un simple photodétecteur.

En plus d'améliorer la résistance à la dispersion chromatique, la modulation PSBT présente aussi la propriété que le spectre du signal qui en résulte est deux fois moins large que celui de la modulation NRZ, ce qui est avantageux pour les transmissions WDM dites denses, c'est-à-dire dont l'intervalle spectral entre canaux WDM est faible.

La modulation PSBT trouve toutefois ses limites dès lors que des phénomènes optiques non linéaires deviennent importants. C'est le cas par exemple lorsqu'on augmente la puissance optique du signal en vue d'augmenter les distances de transmission. On observe alors que pour une valeur de la dispersion chromatique cumulée de la liaison la qualité du signal reçu subit une dégradation qui dépend fortement de la longueur d'onde de la porteuse optique du signal. Le système devient donc moins tolérant à la dispersion chromatique, ce qui limite les possibilités de transmettre des signaux WDM répartis sur une large bande spectrale, sur de longues distance et sans amplifications intermédiaires.

Un autre cas où le problème se pose est celui où la transmission s'effectue par l'intermédiaire de milieux de couplage optique comportant des composants non linéaires même à faible puissance, comme par exemple des portes optiques à base d'amplificateurs optiques semi-conducteurs. Ce dernier cas se rencontre typiquement dans les réseaux équipés de commutateurs utilisant de telles portes optiques.

Une solution à ce problème de dégradation du signal PSBT dû à l'effet Kerr (automodulation de phase, modulation croisée de phase ou de gain) a été proposée dans la demande de brevet européen EP-A-0 975 107, déposée le 20 juillet 1998 et publiée le 26 janvier 2000. La solution consiste à utiliser une modulation PSBT modifiée pour introduire un "chirp" transitoire dont le signe et la valeur optimale dépendent notamment de la dispersion cumulée dans la liaison et des effets non linéaires. Toutefois, l'introduction d'un "chirp" transitoire optimal n'est pas facile à déterminer et il a en outre pour effet d'élargir le spectre du signal optique, ce qui rend la modulation PSBT moins avantageuse pour les transmissions WDM denses.

Pour échapper en partie aux phénomènes non linéaires, une autre approche consiste à choisir des techniques de modulation qui conservent constante la puissance optique du signal. C'est le cas des modulations de fréquence ou de phase optique. La modulation de fréquence optique ou "FSK" (de l'anglais "Frequency-Shift Keying") présente toutefois l'inconvénient que le signal en résultant est sensible à la dispersion chromatique. La modulation de phase optique ou "PSK" (de l'anglais "Phase-Shift Keying") est moins sensible à la dispersion chromatique mais impose une parfaite stabilité de la phase du signal pour permettre une bonne détection au niveau des récepteurs. Par contre, une variante appelée modulation de phase optique différentielle ou "DPSK" (de l'anglais "Differential Phase-Shift Keying") a l'avantage de réduire cette dernière contrainte. Cependant, les modulations PSK ou DPSK entraînent une largeur spectrale du signal qui est la même qu'avec le format de modulation NRZ, donc moins favorable que la modulation PSBT pour les transmissions WDM denses .

Aussi l'invention a pour but de proposer un système de transmission utilisant la modulation PSBT sans chirp transitoire, mais adapté pour rendre le signal transmis moins sensible à la fois à la dispersion chromatique et à l'effet Kerr et plus spécifiquement à l'automodulation de phase.

Plus précisément l'invention a pour objet un système de transmission pour signal optique à phase contrôlée, ce signal étant modulé au rythme d'une horloge de période T qui définit des cellules temporelles successives délimitant dans le signal des niveaux bas ou des niveaux hauts de modulation d'une onde porteuse optique de fréquence optique f0, ledit signal présentant un décalage de phase optique à l'intérieur de chaque cellule temporelle qui délimite un niveau bas de puissance et qui précède ou succède à une cellule qui délimite un niveau haut de puissance, ledit système comportant une liaison optique apte à transmettre ledit signal à phase contrôlée depuis une extrémité d'entrée jusqu'à une extrémité de sortie pour y fournir un signal de sortie correspondant, ledit système étant caractérisé en ce qu'il comporte des moyens optiques correcteurs couplés à ladite extrémité de sortie et/ou inséré en un ou plusieurs points de ladite liaison optique, ces moyens correcteurs appliquant un filtrage optique au signal présent à ladite extrémité de sortie et/ou auxdits points de ladite liaison optique, ce filtrage étant calibré de façon à compenser un élargissement de spectre que ledit signal à phase contrôlée peut subir par automodulation de phase au cours de sa transmission dans ladite liaison optique.

L'invention prend en compte l'observation qu'un signal au format de modulation PSBT transmis dans un milieu non linéaire subit par automodulation de phase un élargissement de son spectre au fur et à mesure de sa propagation dans ce milieu et que l'application d'un filtrage optique conçu pour rétablir la largeur de spectre du signal transmis à celle du signal PSBT initial permet d'améliorer la qualité du signal.

Ainsi, la fonction de transfert de filtrage est calibrée pour produire une diminution de largeur de spectre suffisante pour éliminer une partie des composantes spectrales créées par l'automodulation de phase, sans toutefois atténuer exagérément la partie centrale du spectre car il en résulterait une perte d'information contenue dans le signal, ce qui serait contraire au but recherché. D'une façon générale, le choix du filtrage peut être considéré comme un compromis entre la compensation de l'élargissement du spectre et la perte d'information qui en résulte.

Des simulations pour plusieurs cas particuliers, suivies de vérifications expérimentales ont permis de trouver un gabarit de filtrage pouvant convenir en pratique pour les cas usuels. Par ailleurs, il a été constaté que la compensation de l'élargissement de spectre est d'autant plus bénéfique que le filtrage est réparti le long de la liaison, en aval des éléments qui sont le siège de phénomènes non linéaires. Cette observation conduit en particulier à des mises en oeuvre du filtrage différentes selon que la liaison est constituée d'un seul ou de plusieurs tronçons.

Plus précisément, selon un premier mode de réalisation de l'invention adapté au cas où la liaison comporte un seul tronçon muni d'une fibre de transmission, lesdits moyens optiques correcteurs sont constitués d'un filtre optique couplé à ladite extrémité de sortie et ayant une fonction de transfert, exprimant les variations en fonction de la fréquence optique f de son coefficient de transmission, approximativement gaussienne au voisinage de f0, centrée sur f0, avec une largeur spectrale à mi-hauteur comprise entre 0,5/T et 1,25/T, et avantageusement sensiblement égale à 0,75/T.

Selon un second mode de réalisation de l'invention adapté au cas où la liaison comporte N tronçons ayant respectivement N extrémités d'entrée et N extrémités de sortie et munis respectivement de N amplificateurs optiques suivis respectivement de N fibres de transmission, lesdits moyens optiques correcteurs sont constitués de N filtres optiques couplés respectivement auxdites N extrémités de sortie desdits tronçons et tels que la fonction de transfert d'un filtre équivalent formé par le couplage en cascade desdits N filtres, exprimant les variations en fonction de la fréquence optique f de son coefficient de transmission, soit approximativement gaussienne au voisinage de f0, centrée sur f0, avec une largeur spectrale à mi-hauteur comprise entre 0,5/T et 1,25/T, et avantageusement sensiblement égale à 0,75/T.

Selon un autre aspect de réalisation de l'invention, quel que soit le type de liaison (un seul ou plusieurs tronçons), le ou chacun des filtres optiques (FG) sera un filtre périodique présentant un intervalle spectral libre exprimé en fréquences supérieur à 1/T.

L'invention s'applique également aux systèmes de transmission optique pour signaux au format PSBT multiplexés en longueur d'onde. Un tel système est donc prévu pour transmettre un multiplex formé de plusieurs signaux optiques à phase contrôlée portés respectivement par plusieurs ondes porteuses optiques de fréquences optiques successives présentant un décalage fréquentiel donné. Dans ce cas et selon un autre aspect de réalisation de l'invention, le ou chacun des filtres optiques sera avantageusement un filtre périodique présentant un intervalle spectral libre exprimé en fréquences égal audit décalage fréquentiel. Grâce à cette disposition il suffit d'un seul filtre pour traiter simultanément les différents signaux formant le multiplex.

D'autres aspects et avantages de l'invention apparaîtront dans la suite de la description en référence aux figures.

- La figure 1 représente schématiquement un système de transmission selon l'invention, dans le cas d'une liaison optique constituée d'un seul tronçon.
- La figure 2 représente schématiquement un système de transmission selon l'invention, dans le cas d'une liaison optique constituée de plusieurs tronçons.

- - La figure 3 représente schématiquement des spectres de signaux modulés au format PSBT émis et reçus dans le cas d'un système de transmission conventionnel.

- La figure 4 représente une fonction de transfert de filtre utilisable dans un système de transmission selon l'invention.
- La figure 5 représente une fonction de transfert de filtre périodique utilisable dans un système de transmission WDM selon l'invention.
- Les figures 6 et 7 représentent pour différentes valeurs de puissance optique de signal les variations de la sensibilité d'un récepteur en fonction de la dispersion chromatique, pour des systèmes de transmission respectivement conventionnel et selon l'invention, dans le cas d'une liaison optique constituée d'un seul tronçon.
- Les figures 8 et 9 représentent pour différentes valeurs de puissance optique de signal les variations de la sensibilité d'un récepteur en fonction de la dispersion chromatique, pour des systèmes de transmission respectivement conventionnel et selon l'invention, dans le cas d'une liaison optique constituée de trois tronçons.

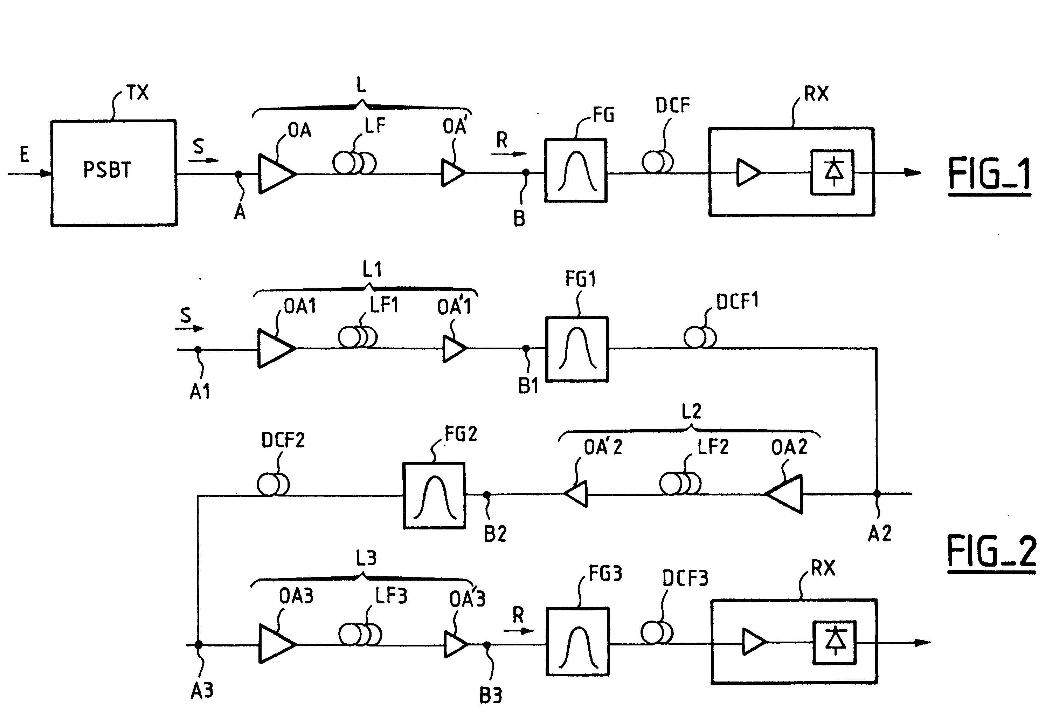

Les figures 1 et 2 montrent schématiquement et à titre d'exemple deux systèmes de transmission optique selon l'invention.

Dans le cas de la figure 1, le système comporte une liaison optique L composée d'un seul tronçon et disposée entre un émetteur TX et un récepteur RX. En fonction d'un signal source, par exemple un signal électrique E modulé au format NRZ au rythme d'une horloge de période T, l'émetteur TX est apte à délivrer un signal optique à phase contrôlée S modulé au même rythme d'horloge au format PSBT, tel qu'exposé en détails dans les documents précités. Le récepteur RX comporte essentiellement un préamplificateur optique suivi d'un photodétecteur.

La liaison L comporte une extrémité d'entrée A prévue pour recevoir le signal S et une extrémité de sortie B, située au voisinage du récepteur RX et prévue pour délivrer un signal de sortie correspondant R. La liaison L est constituée principalement d'une fibre de transmission LF et d'un amplificateur optique d'émission OA disposé entre l'émetteur TX et la fibre LF. Pour améliorer le rapport signal à bruit en réception, un préamplificateur optique de réception OA' peut en outre être prévu en aval de la fibre LF.

Dans un système conventionnel, le signal de sortie R serait couplé directement au récepteur RX, ou éventuellement par l'intermédiaire d'un élément de compensation de dispersion chromatique DCF. Un filtre passe-bande centrée sur la fréquence d'une onde porteuse de signal peut aussi être prévu en amont du récepteur, par exemple pour extraire un canal dans le cas d'une transmission WDM ou pour atténuer du bruit présent en dehors de la bande du signal. Dans ce cas, le coefficient de transmission du filtre en fonction de la fréquence optique a toujours une largeur spectrale très supérieure à la fréquence d'horloge 1/T de modulation du signal.

Pour pouvoir augmenter la distance de transmission au moyen d'un seul tronçon, on doit augmenter la longueur de la fibre LF mais aussi compenser l'augmentation d'atténuation qui en résulte en augmentant la puissance optique du signal injecté dans la fibre LF. Au delà d'une certaine puissance, la fibre est le siège de phénomènes optiques non linéaires (effet Kerr) importants.

En particulier, dans le cas d'un signal modulé au format PSBT, qui en l'absence d'effets non linéaires est peu sensible à la dispersion chromatique, on observe une moindre tolérance à la dispersion chromatique cumulée dans la liaison. Il en résulte une limitation de capacité de transmission, par exemple dans le cas de signaux WDM.

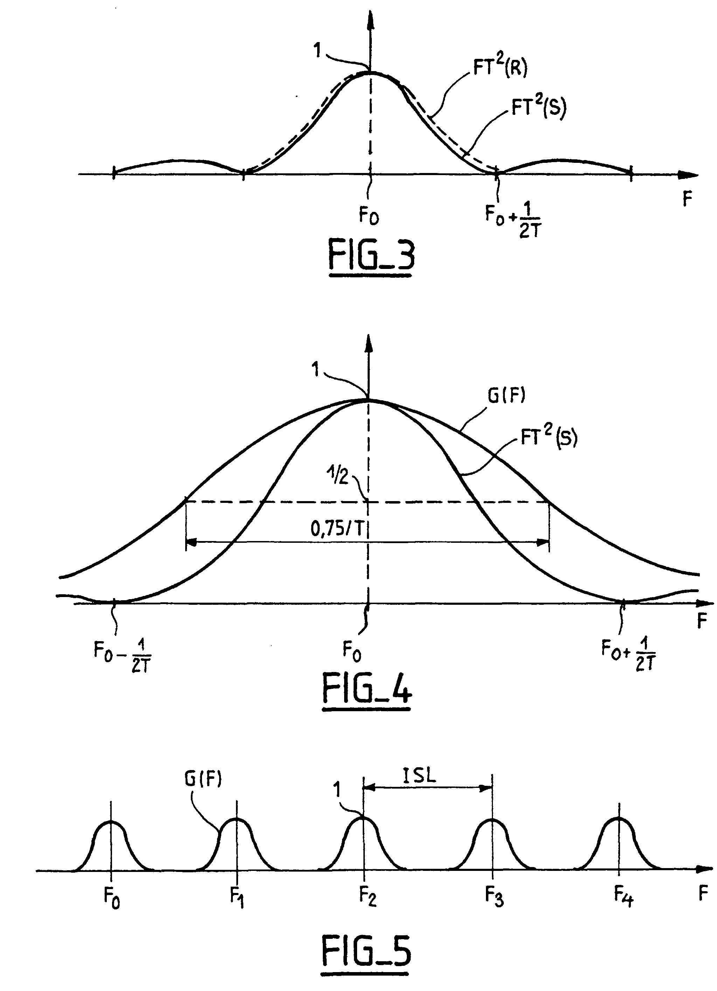

En analysant plus en détail ce phénomène, il a pu être constaté que cette dégradation est corrélée à un élargissement du spectre du signal au fur et à mesure de sa propagation dans la fibre. Ceci est illustré par la figure 3.

La figure 3 montre en trait plein une courbe approximative du spectre du signal émis S modulé au format PSBT. Ce spectre qui exprime les variations de la densité spectrale de puissance normalisée $FT^2$ (S) en fonction de la fréquence optique f correspond à un signal PSBT de fréquence porteuse optique f0 et de période bit T. La figure 3 montre aussi en tirets la courbe $FT^2$ (R) représentative du spectre du signal reçu R dans le cas d'une liaison conventionnelle. Le spectre du signal subit donc au cours de sa transmission dans la liaison un élargissement qui est attribué principalement à une automodulation de phase du signal.

Selon l'invention, un filtre optique FG est couplé à l'extrémité de sortie B de façon à se trouver inséré entre cette extrémité B et le récepteur RX. Le filtre est calibré pour appliquer au signal R une diminution de largeur de son spectre de façon à compenser, voire surcompenser, l'élargissement produit dans la fibre.

Des simulations et des expérimentations permettent pour chaque cas particulier de liaison de trouver un gabarit de filtrage idéal adapté. Les filtres pouvant convenir en pratique sont typiquement de type gaussien (ou approchant) et ayant une fonction de transfert (qui exprime les variations du coefficient de transmission du filtre en fonction de la fréquence optique f) centrée sur f0 et de largeur spectrale à mi-hauteur comprise entre 0,5/T et 1,25/T.

De préférence, cette largeur spectrale à mi-hauteur est voisine de 0,75/T.

La figure 4 montre une courbe représentative de la fonction de transfert normalisée G(f) correspondant à ce dernier cas. On peut aussi exprimer cette fonction de transfert par :

$$G(f) = \exp[-a^2.(f\text{-}f0)^2.T^2]$$

Ainsi, f et f0 étant exprimés en hertz et T en secondes, on trouve que $a^2$ est sensiblement égal à 4,93.

Dans d'autres systèmes de transmission, la liaison est constituée de plusieurs tronçons. A titre d'exemple, le cas d'une liaison à trois tronçons est représenté par la figure 2.

Les études ayant montré qu'il est préférable de répartir le filtrage le long de la liaison, la mise en oeuvre du filtrage dans le cas d'une liaison à plusieurs tronçons conduit à une solution différente du premier cas exposé ci-dessus.

Comme le montre la figure 2, la liaison est composée d'une succession de tronçons L1, L2, L3. Chaque tronçon a une constitution identique à la liaison L de figure 1. On retrouve pour chaque tronçon L1-L3 une extrémité d'entrée A1-A3 et une extrémité de sortie B1-B3, un amplificateur optique d'émission OA1-OA3 suivi d'une fibre de transmission LF1-LF3, d'un préamplificateur optique de réception OA'1-OA'3 et d'un élément de compensation de dispersion chromatique DCF1-DCF3. L'extrémité d'entrée A1 du premier tronçon L1 est prévue pour recevoir de l'émetteur TX (non représenté) le signal S, tandis que l'extrémité de sortie B3 du dernier tronçon L3 est située au voisinage du récepteur RX et prévue pour délivrer un signal de sortie correspondant R.

Selon l'invention, les moyens optiques correcteurs sont constitués de plusieurs filtres optiques FG1, FG2, FG3 couplés respectivement aux extrémités de sortie B1, B2, B3 des tronçons de façon à se trouver insérés respectivement entre ces extrémités de sortie B1, B2 et les extrémités d'entrée A2, A3 des tronçons suivants, à l'exception du dernier filtre qui est inséré entre l'extrémités de sortie B3 du dernier tronçon et le récepteur RX.

Comme précédemment, les simulations et les expérimentations permettent pour chaque cas particulier de liaison de trouver un gabarit de filtrage optimal adapté.

En pratique les filtres FG1, FG2, FG3 seront avantageusement choisis de sorte que la fonction de transfert du filtre équivalent qui serait formé par le couplage en cascade de ces filtres soit approximativement gaussienne au voisinage de f0, centrée sur f0, avec une largeur spectrale à mi-hauteur comprise entre 0,5/T et 1,25/T. De préférence, cette largeur spectrale à mi-hauteur est sensiblement égale à 0,75/T.

Ainsi, dans le cas d'une liaison à N tronçons, en prenant N filtres de Gauss identiques de fonction de transfert $Gi(f) = \exp [-b^2.(f\text{-}f0)^2.T^2]$, la fonction de transfert équivalente pour ces N filtres en cascade sera :

$$Ge \ (f) = \exp [-N.b^2.(f\text{-}f0)^2.T^2]$$

On aura donc $N.b^2 = a^2$, ce qui implique pour chacun des filtres une largeur spectrale à mi-hauteur N fois plus grande que pour le filtre adapté au cas où la liaison comporte un seul tronçon.

Quel que soit le type de liaison (un seul ou plusieurs tronçons), chacun des filtres optiques peut être un filtre périodique, tel qu'un filtre Fabry-Pérot, respectant les critères précédents, à condition que son intervalle spectral libre exprimé en fréquences soit supérieur à 1/T.

Les systèmes qui viennent d'être décrits sont aussi utilisables pour des transmissions WDM de signaux au format PSBT. L'émetteur TX peut alors comporter des moyens (non représentés) pour moduler et combiner plusieurs signaux au format PSBT portés respectivement par plusieurs ondes porteuses optiques de fréquences optiques différentes. Le récepteur RX comporte alors des moyens (non représentés) pour démultiplexer le signal reçu de façon à séparer ses différentes composantes spectral.

Dans ce cas, une façon particulièrement simple de mettre en oeuvre l'invention consiste à utiliser comme filtres optiques des filtres périodiques ayant un intervalle spectral libre ISL égal au décalage entre les fréquences optiques successives des ondes porteuses optiques du multiplex.

Ce cas est schématisé à la figure 5 qui montre la fonction de transfert G(f) d'un filtre périodique adapté à une transmission multiplex de canaux portés par des ondes porteuses de fréquences optiques f0, f1, f2, f3, f4.

Pour apprécier l'efficacité de l'invention, la qualité des signaux reçus a été évaluée avec des systèmes de transmission conventionnels et avec ces mêmes systèmes munis des moyens optiques correcteurs selon l'invention.

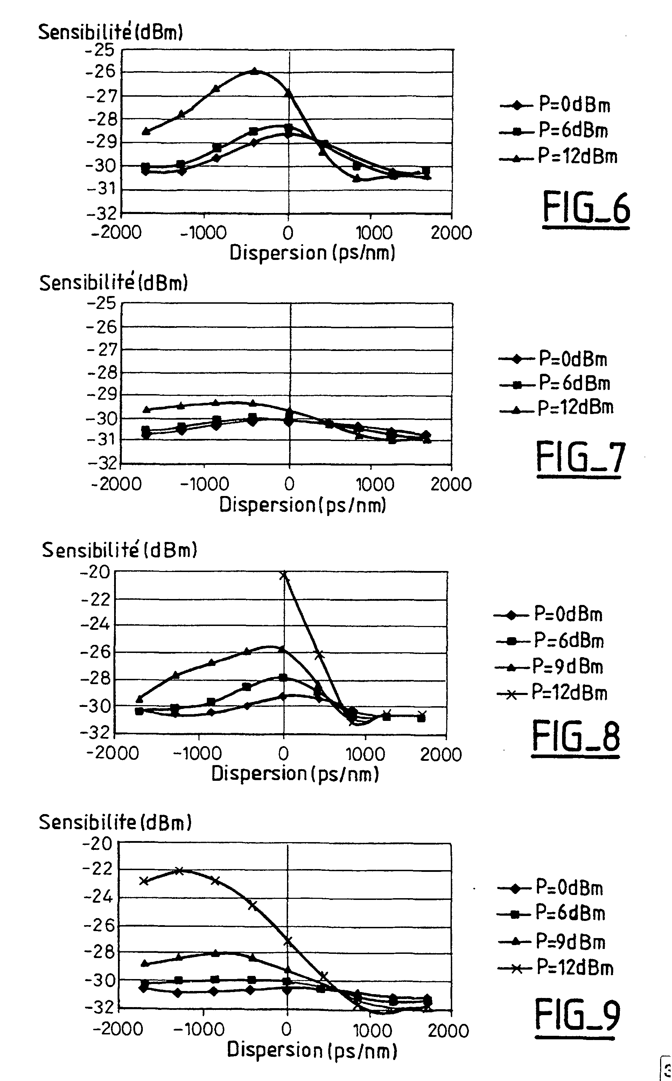

Les figures 6 à 9 permettent d'exposer quelques résultats obtenus, sous la forme de courbes de sensibilité représentant les variations de la sensibilité d'un récepteur en fonction de la dispersion chromatique et pour différentes valeurs de puissance optique P du signal émis. La dispersion chromatique est la dispersion chromatique dite "résiduelle", c'est-à-dire la dispersion cumulée introduite par tous les éléments constitutifs de la liaison, notamment fibre(s) de transmission, éléments de compensation de dispersion chromatique, y compris le cas échéant les moyens correcteurs (filtres) selon l'invention.

La sensibilité qui constitue une évaluation de la qualité de la transmission est définie ici comme la valeur minimale de la puissance optique moyenne (en dBm) de signal à appliquer au récepteur pour obtenir un taux d'erreur fixé à $10^{-9}$.

Les courbes représentées ont été obtenues avec des liaisons munies de fibres standard de 100 km et pour des signaux émis modulés au format PSBT à 10Gbit/s. Le modulateur électro-optique utilisé est de type Mach-Zehnder, commandé en mode "push-pull" par un signal électrique filtré par un filtre de Bessel de bande passante de 2,8 GHz.

Les figures 6 et 7 concernent d'abord le cas d'une liaison optique constituée d'un seul tronçon de 100 km, tel qu'illustré à la figure 1. La figure 6 correspond à un système conventionnel, c'est-à-dire démuni du filtre FG. La figure 7 correspond à un système selon l'invention, c'est-à-dire dont la liaison est couplée en sortie au filtre FG de largeur spectrale à mi-hauteur égale à 7,5 GHz ou , exprimée en longueur d'onde, égale à 0,06 nm pour une longueur d'onde porteuse de 1,55µm.

Chacune de ces figures montre trois courbes de sensibilité respectivement pour des puissances P du signal fourni par l'amplificateur d'émission OA à la fibre LF de 0 dBm, 6 dBm et 12 dBm.

En observant d'abord les courbes de la figure 6, on remarque qu'au delà de 6 dBm le signal reçu subit une dégradation importante pour les valeurs de dispersion cumulée inférieures à +500 ps/nm. En d'autre termes, à forte puissance optique d'émission, le système n'est pas tolérant à la dispersion chromatique, ce qui limite les possibilités de transmettre des signaux WDM à large bande sur de longues distance et sans amplifications intermédiaires.

En comparant ces courbes à celles de la figure 7, on constate que l'invention procure une forte amélioration de la tolérance à la dispersion chromatique, même pour les valeurs négatives de dispersion.

Les figures 8 et 9 concernent le cas d'une liaison optique constituée de trois tronçons de 100 km, tel qu'illustré à la figure 2. La figure 8 correspond à un système conventionnel, c'est-à-dire démuni des filtres FG1, FG2, FG3. La figure 9 correspond à un système selon l'invention, c'est-à-dire où chacun des trois tronçons est muni en sortie d'un filtre FG1, FG2, FG3 de largeur spectrale à mi-hauteur égale à 13 GHz ou , exprimée en longueur d'onde, égale à 0,10 nm pour une longueur d'onde porteuse de 1,55µm.

Chacune de ces figures montre quatre courbes de sensibilité respectivement pour des puissances P du signal appliqué à chaque fibre LF1, LF2, LF3 de 0 dBm, 6 dBm ,9 dBm et 12 dBm.

En observant les courbes de la figure 8, on voit que pour les valeurs de dispersion cumulée inférieures à +500 ps/nm la dégradation du signal reçu devient importante à partir de 9 dBm et est très importante pour 12 dBm. En comparant ces courbes à celles de la figure 9, on peut constater l'amélioration obtenue grâce à l'invention.

Il est intéressant de noter que la présence du ou des filtres selon l'invention n'introduit pas de pénalité pour les faibles puissances.

Ces courbes montrent aussi l'intérêt de disposer d'une liaison présentant une dispersion chromatique cumulée positive, ce qui implique généralement l'introduction de moyens de compensation de dispersion chromatique. Dans ce cas, il a été par ailleurs vérifié que ces moyens de compensation doivent de préférence être répartis sur les différents tronçons qui constituent la liaison.

Plus précisément, comme représenté à la figure 2, le système de transmission comportera alors des éléments de compensation de dispersion chromatique DCF1, DCF2, DCF3 couplés respectivement aux tronçons L1, L2, L3, de sorte que la dispersion chromatique cumulée introduite par ces tronçons (L1, L2, L3), par les filtres optiques associés (FG1, FG2, FG3) et par les éléments de compensation de dispersion chromatique associés DCF1, DCF2, DCF3 soit positive pour la fréquence optique f0 de l'onde porteuse optique du signal optique S à phase contrôlée ou, dans le cas d'une transmission de multiplex WDM, pour la fréquence optique moyenne des ondes porteuses optiques des signaux optiques à phase contrôlée formant ce multiplex.

## Revendications

**1.** Système de transmission pour signal optique (S) à phase contrôlée, ce signal étant modulé au rythme d'une horloge de période T qui définit des cellules temporelles successives délimitant dans le signal (S) des niveaux bas ou des niveaux hauts de modulation d'une onde porteuse optique de fréquence optique f0, ledit signal (S) présentant un décalage de phase optique à l'intérieur de chaque cellule temporelle qui délimite un niveau bas de puissance et qui précède ou succède à une cellule qui délimite un niveau haut de puissance, ledit système comportant une liaison optique (L) apte à transmettre ledit signal à phase contrôlée (S) depuis une extrémité d'entrée (A, A1) jusqu'à une extrémité de sortie (B, B3), ledit système étant **caractérisé en ce qu'**il comporte des moyens optiques correcteurs (FG, FG1, FG2, FG3) couplés à ladite extrémité de sortie (B, B3) et/ou inséré en un ou plusieurs points (B1, B2) de ladite liaison optique (L) , ces moyens correcteurs appliquant un filtrage optique au signal (R) présent à ladite extrémité de sortie (B, B3) et/ou auxdits points (B1 B2) de ladite liaison optique (L), ce filtrage étant calibré de façon à compenser un élargissement de spectre que ledit signal à phase contrôlée (S) peut subir par automodulation de phase au cours de sa transmission dans ladite liaison optique (L).

2. Système de transmission selon la revendication 1, **caractérisé en ce que** ladite liaison (L) comportant un seul tronçon muni d'une fibre de transmission (LF), lesdits moyens optiques correcteurs sont constitués d'un filtre optique (FG) couplé à ladite extrémité de sortie (B) et ayant une fonction de transfert (G(f)), exprimant les variations en fonction de la fréquence optique f de son coefficient de transmission, approximativement gaussienne au voisinage de f0, centrée sur f0, avec une largeur spectrale à mi-hauteur comprise entre 0,5/T et 1,25/T.

3. Système de transmission selon la revendication 2, **caractérisé en ce que** ladite largeur spectrale à mi-hauteur est sensiblement égale à 0,75/T.

4. Système de transmission selon l'une des revendications 2 ou 3, **caractérisé en ce que** ledit filtre optique (FG) est un filtre périodique présentant un intervalle spectral libre (ISL) exprimé en fréquences supérieur à 1/T.

5. Système de transmission selon la revendication 4, **caractérisé en ce que** ledit système étant prévu pour transmettre un multiplex en longueur d'onde formé de plusieurs signaux optiques à phase contrôlée portés respectivement par plusieurs ondes porteuses optiques de fréquences optiques successives (f0, f1, f2, f3) présentant un décalage fréquentiel donné, ledit intervalle spectral libre (ISL) est égal audit décalage fréquentiel.

6. Système de transmission selon la revendication 1, **caractérisé en ce que** ladite liaison comportant N tronçons (L1, L2, L3) ayant respectivement N extrémités d'entrée (A1, A2, A3) et N extrémités de sortie (B1, B2, B3) et munis respectivement de N amplificateurs optiques (OA1, OA2, OA3) suivis respectivement de N fibres de transmission (LF1, LF2, LF3), lesdits moyens optiques correcteurs sont constitués de N filtres optiques (FG1, FG2, FG3) couplés respectivement auxdites N extrémités de sortie (B1, B2, B3) desdits tronçons et tels que la fonction de transfert (G(f)) du filtre équivalent formé par le couplage en cascade desdits N filtres (FG1, FG2, FG3), exprimant les variations en fonction de la fréquence optique f de son coefficient de transmission, soit approximativement gaussienne au voisinage de f0, centrée sur f0, avec une largeur spectrale à mi-hauteur comprise entre 0,5/T et 1,25/T.

7. Système de transmission selon la revendication 6, **caractérisé en ce que** ladite largeur spectrale à mi-hauteur est sensiblement égale à 0,75/T.

8. Système de transmission selon l'une des revendications 6 ou 7, **caractérisé en ce que** chacun desdits filtres optiques (FG1, FG2, FG3) est un filtre périodique présentant un intervalle spectral libre (ISL) supérieur à 1/T.

9. Système de transmission selon la revendication 8, **caractérisé en ce que** ledit système étant prévu pour transmettre un multiplex en longueur d'onde formé de plusieurs signaux optiques à phase contrôlée portés respectivement par plusieurs ondes porteuses optiques de fréquences optiques successives (f0-f4) présentant un décalage fréquentiel donné, ledit intervalle spectral libre (ISL) est égal audit décalage fréquentiel.

10. Système de transmission selon l'une des revendications 6 à 9, **caractérisé en ce qu'**il comporte des éléments de compensation de dispersion chromatique (DCF1, DCF2, DCF3) couplés respectivement auxdits N tronçons (L1, L2, L3), de sorte que la dispersion chromatique cumulée introduite par lesdits tronçons (L1, L2, L3), par lesdits filtres optiques associés (FG1, FG2, FG3) et par lesdits éléments de compensation de dispersion chromatique associés (DCF1, DCF2, DCF3) soit positive pour la fréquence optique (f0) de ladite onde porteuse optique dudit signal optique (S) à phase contrôlée ou, le cas échéant pour la fréquence optique moyenne desdites ondes porteuses optiques desdits signaux optiques à phase contrôlée formant ledit multiplex.

**Claims**

1. A transmission system for transmitting controlled phase optical signals (S) modulated at the timing rate of a clock of period T which defines successive time cells defining in the signal (S) low levels or high levels of modulation of an optical carrier wave of optical frequency $F_0$, said signal (S) having an optical phase shift in each time cell which defines a low power level and which precedes or follows a cell which defines a high power level, said system including an optical link (L) adapted to transmit said controlled phase signal (S) from an entry end (A, A1) to an exit end (B, B3), and said system being **characterized in that** it includes optical corrector means (FG, FG1, FG2, FG3) coupled to said exit end (B, B3) and/or inserted at one or more points (B1, B2) of said optical link (L), said corrector means applying optical filtering to the signal (R) at said exit end (B, B3) and/or at said points (B1, B2) of said optical link (L), said filtering being set to compensate widening of its spectrum that said controlled phase signal (S) might suffer because of phase self-modulation as it is transmitted in said optical link (L).

2. A transmission system according to claim 1, **characterized in that** said link (L) includes a single section of line fiber (LF) and said optical corrector means comprise an optical filter (FG) coupled to said exit end (B) and having a transfer function (G(F)) expressing variations as a function of the optical frequency F of its transmission coefficient that is approximately Gaussian in the vicinity of $F_0$, centered at $F_0$, with a half-height spectral width from 0.5/T to 1.25/T.

3. A transmission system according to claim 2, **characterized in that** said half-height spectral width is substantially equal to 0.75/T.

4. A transmission system according to claim 2 or claim 3, **characterized in that** said optical filter (FG) is a periodic filter having a free spectral interval (ISL), when expressed in terms of frequency, greater than 1/T.

5. A transmission system according to claim 4, **characterized in that** said system is adapted to transmit a wavelength division multiplex formed of a plurality of controlled phase optical signals carried by a plurality of respective optical carrier waves with successive optical frequencies ($F_0$, $F_1$, $F_2$, $F_3$) having a given frequency shift and said free spectral interval (ISL) is equal to said frequency shift.

6. A transmission system according to claim 1, **characterized in that** said link comprises N sections (L1, L2, L3) having N respective entry ends (A1, A2, A3), N respective exit ends (B1, B2, B3), and N respective optical amplifiers (OA1, OA2, OA3) followed by N respective line fibers (LF1, LF2, LF3), said optical corrector means comprise N optical filters (FG1, FG2, FG3) respectively coupled to said N exit ends (B1, B2, B3) of said sections and such that the transfer function (G(F)) of the equivalent filter formed by coupling said N filters (FG1, FG2, FG3) in cascade, expressing variations of its transmission coefficient as a function of the optical frequency F, is approximately Gaussian in the vicinity of $F_0$, centered at $F_0$, with a half-height spectral width from 0.5/T to 1.25/T.

7. A transmission system according to claim 6, **characterized in that** said half-height spectral width is substantially equal to 0.75/T.

8. A transmission system according to claim 6 or claim 7, **characterized in that** each of said optical filters (FG1, FG2, FG3) is a periodic filter having a free spectral interval (ISL) greater than 1/T.

9. A transmission system according to claim 8, **characterized in that** said system is adapted to transmit a wavelength division multiplex formed of a plurality of controlled phase optical signals carried by a plurality of respective optical carrier waves with successive optical frequencies ($F_0$-$F_4$) having a given frequency shift and said free spectral interval (ISL) is equal to said frequency shift.

10. A transmission system according to any one of claims 6 to 9, **characterized in that** it includes respective chromatic dispersion compensators (DCF1, DCF2, DCF3) coupled to said N sections (L1, L2, L3) so that the cumulative chromatic dispersion introduced by said sections (L1, L2, L3), said associated optical filters (FG1, FG2, FG3), and said associated chromatic dispersion compensators (DCF1, DCF2, DCF3) is positive for the optical frequency ($F_0$) of said optical carrier wave of said controlled phase optical signal (S) or where applicable for the average optical frequency of said optical carrier waves of said controlled phase optical signals forming said multiplex.

**Patentansprüche**

1. Übertragungssystem für ein phasengesteuertes optisches Signal (S), wobei dieses Signal im Rhythmus eines Uhrentakts mit Periode T moduliert wird, welcher aufeinanderfolgende Zeitzellen definiert, die im Signal (S) untere und obere Modulationspegel einer optischen Trägerwelle mit der optischen Frequenz f0 begrenzen, wobei das Signal (S) eine optische Phasenverschiebung im Innern jeder Zeitzelle aufweist, die einen unteren Leistungspegel begrenzt und die einer Zelle vorausgeht oder auf sie folgt, welche einen oberen Leitungspegel begrenzt, wobei das System eine optische Verbindung (L) aufweist, welche geeignet ist, das phasengesteuerte Signal (S) von einem Eingangsende (A, A1) bis zu einem Ausgangsende (B, B3) zu übertragen; hierbei ist das System **dadurch gekennzeichnet, dass** es optische Korrekturvorrichtungen (FG, FG1, FG2, FG3) aufweist, die mit dem Ausgangsende (B, B3) gekoppelt sind und/oder in einen oder mehrere Punkte (B1, B2) der optischen Verbindung (L) eingefügt sind, wobei diese Korrekturvorrichtungen eine optische Filterung auf das an diesem Ausgangsende (B, B3) und/oder an diesen Punkten (B1, B2) der optischen Verbindung (L) vorhandene Signal (R) anwenden, wobei diese Filterung so kalibriert wird, dass sie eine Spektrumsverbreiterung kompensiert, welche dieses phasengesteuerte Signal (S) durch Phasen-Eigenmodulation während seiner Übertragung in der optischen Verbindung (L) erfahren kann.

2. Übertragungssystem nach Anspruch 1, **dadurch gekennzeichnet, dass** die Verbindung (L) einen einzigen Abschnitt aufweist, der mit einer Übertragungs-Lichtleitfaser (LF) ausgerüstet ist, wobei die optischen Korrekturvorrichtungen aus einem optischen Filter (FG) bestehen, der mit dem Ausgangsende (B) gekoppelt ist und eine Übertragungsfunktion (G(f)) besitzen, welche die Veränderungen in Abhängigkeit von der optischen Frequenz f ihres Übertragungskoeffizienten ausdrückt, in der Nähe von f0 ungefähr dem gaußschen Typ entsprechend, zentriert auf f0, mit einer Spektralbreite auf halber Höhe zwischen 0,5/T und 1,25/T.

3. Übertragungssystem nach Anspruch 2, **dadurch gekennzeichnet, dass** die Spektralbreite auf halber Höhe ungefähr gleich 0,75/T ist.

4. Übertragungssystem nach einem der Ansprüche 2 oder 3, **dadurch gekennzeichnet, dass** der optische Filter (FG) ein periodischer Filter ist, der ein in Frequenzen ausgedrücktes freies Spektralintervall größer 1/T aufweist.

5. Übertragungssystem nach Anspruch 4, **dadurch gekennzeichnet, dass** das System dafür vorgesehen ist, einen Wellenlängenmultiplex zu übertragen, der von mehreren phasengesteuerten optischen Signalen gebildet wird, die jeweils von mehreren optischen Trägerwellen mit aufeinanderfolgenden optischen Frequenzen (F0, F1, f2, f3) getragen werden, welche eine gegebene Frequenzverschiebung aufweisen, wobei das freie Spektralintervall (ISL) gleich dieser Frequenzverschiebung ist.

6. Übertragungssystem nach Anspruch 1, **dadurch gekennzeichnet, dass** die Verbindung N Abschnitte (L1, L2, L3) aufweist, die N Eingangsenden (A1, A2, A3) und N Ausgangsenden (B1, B2, B3) besitzen und die mit N optischen Verstärkern (OA1, OA2, OA3) ausgerüstet sind, gefolgt von N Übertragungs-Lichtleitfasern (LF1, LF2, LF3); hierbei bestehen diese optischen Korrekturvorrichtungen aus N optischen Filtern (FG1, FG2, FG3), die jeweils mit den N Ausgangsenden (B1, B2, B3) dieser Abschnitte gekoppelt sind, und zwar so, dass die Übertragungsfunktion (G(f)) des äquivalenten, durch die kaskadenartige Koppelung dieser N Filter (FG1, FG2, FG3) gebildeten Filters, welche die Änderungen in Abhängigkeit von der optischen Frequenz f ihres Übertragungskoeffizienten ausgedrückt, in der Nähe von f0 ungefähr eine gaußsche Funktion ist, zentriert auf f0, mit einer Spektralbreite auf halber Höhe zwischen 0,5/T und 1,25/T.

7. Übertragungssystem nach Anspruch 6, **dadurch gekennzeichnet, dass** die Spektralbreite auf halber Höhe ungefähr gleich 0,75/T ist.

8. Übertragungssystem nach einem der Ansprüche 6 oder 7, **dadurch gekennzeichnet, dass** jeder der optischen Filter (FG1, FG2, FG3) ein periodischer Filter ist, der ein in Frequenzen ausgedrücktes freies Spektralintervall größer 1/T aufweist.

9. Übertragungssystem nach Anspruch 8, **dadurch gekennzeichnet, dass** das System für die Übertragung eines Wellenlängenmultiplex vorgesehen ist, der aus mehreren phasengesteuerten optischen Signalen gebildet wird, die jeweils von mehreren optischen Trägerwellen mit aufeinanderfolgenden optischen Frequenzen (f0-f4) getragen werden, welche eine gegebene Frequenzverschiebung aufweisen, wobei das freie Spektralintervall (ISL) gleich dieser Frequenzverschiebung ist.

10. Übertragungssystem nach einem der Ansprüche 6 bis 9, **dadurch gekennzeichnet, dass** es Elemente zur Kompensation der chromatischen Dispersion (DCF1, DCF2, DCF3) aufweist, die jeweils mit den N Abschnitten (L1, L2, L3) in der Weise gekoppelt sind, dass die kumulierte chromatische Dispersion, die durch diese Abschnitte (L1, L2, L3), durch die dazugehörigen optischen Filter (FG1, FG2, FG3) und durch die dazugehörigen Elemente zur Kompensation der chromatischen Dispersion (DCF1, DCF2, DCF3) eingeführt wird, für die optische Frequenz (f0) der optischen Trägerwelle des phasengesteuerten optischen Signals (S) positiv ist; oder gegebenenfalls für die mittlere optische Frequenz der optischen Trägerwellen der phasengesteuerten optischen Signale, die den Multiplex bilden.

**FIG_1**

**FIG_2**

FIG_3

FIG_4

FIG_5

FIG_6

FIG_7

FIG_8

FIG_9